(19) **Europäisches Patentamt European Patent Office Office européen des brevets**

(11) **EP 4 765 944 A1**

(12) **EUROPEAN PATENT APPLICATION**

(43) Date of publication:
24.06.2026 Bulletin 2026/26

(21) Application number: 24222313.9

(22) Date of filing: **20.12.2024**

(51) International Patent Classification (IPC):
*H04W 28/22* (2009.01)

(52) Cooperative Patent Classification (CPC):
**H04W 28/22;** H04L 47/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventor: **SCHNIEDERS, Dominik**
**52078 Aachen (DE)**

(74) Representative: **RDL Patentanwälte PartG mbB**
**Senefelderstrasse 26**
**70176 Stuttgart (DE)**

Remarks:
Amended claims in accordance with Rule 137(2) EPC.

(54) **A METHOD FOR OPERATING A SCHEDULER OF AN ACCESS POINT OF A RAN**

(57)    A method for operating a scheduler of an access point of a radio access network, RAN, wherein an access point of a radio access network forwards data packets transmitted by the distributed real-time application via a wireless connection provided by the access point and a scheduler of the access point assigns spectral resources to the wireless connection; a distributed real-time application, an access point for a radio access network, a radio access network and a computer program product.

Fig. 1

**Description**

The invention relates to a method for operating a scheduler of an access point of a radio access network, RAN, wherein an access point of a radio access network forwards data packets transmitted by the distributed real-time application via a wireless connection provided by the access point and a scheduler of the access point allocates spectral resources to the wireless connection. The invention further relates to a distributed real-time application, an access point for a radio access network, a radio access network and a computer program product.

Methods of the above-mentioned type are known in the state of the art and are used to provide distributed real-time applications with a low and stable latency of the wireless connection. The latency herein indicates an unavoidable transmission delay related to the wireless connection. A stability of the latency corresponds to a low volatility of the latency wherein the volatility of the latency is usually referred to as a jitter.

In greater detail, a sender of the distributed real-time application transmits the data packets via the wireless connection at a data rate, the data rate immediately depending on a size and an incidence, i.e. a frequency of the transmitted data packets.

The sender is executed by a first node and the receiver is executed by a second node remote from the first node, the sender and the receiver transmitting data packets via the wireless connection. Alternatively, the first node may execute the receiver while the second node may execute the sender. Of course, the first node and the second node may also alternate in executing the sender and the receiver, respectively, during execution of the distributed real-time application.

The distributed real-time application, herein, may also be a near-real-time application and requires a low and stable latency in order to function properly. Autonomous driving, online gaming and video calling are exemplary distributed real-time applications.

For instance, the scheduler may signal the determined target data rate indirectly by applying a low latency low loss scalable throughput, L4S, algorithm to a queue controlled by the scheduler. The L4S algorithm is specified by RFC 9330 and uses an explicit congestion notification, ECN, protocol exploiting bits of an internet protocol, IP, header of the data packets for signaling a filling level of the queue.

However, the L4S algorithm requires the scheduler to consecutively measure waiting times of the transmitted data packets in the queue and occasionally marking the transmitted data packets. Apart from that, the distributed real-time application has to strictly check received data packets for marks inserted by the scheduler and evaluate a percentage of received data packets having a mark.

It is, therefore, an object of the invention to suggest a method for operating a scheduler of an access point of a radio access network, RAN, which allows for providing a distributed real-time application with a wireless connection having a very stable latency and avoids the L4S algorithm. Further objects of the invention are, providing a distributed real-time application, an access point for a radio access network, a radio access network and a computer program product.

A first aspect of the invention is a method for operating a scheduler of an access point of a radio access network, RAN, wherein an access point of a radio access network forwards data packets transmitted by the distributed real-time application via a wireless connection provided by the access point and a scheduler of the access point allocates spectral resources to the wireless connection.

Of course, the scheduler also allocates spectral resources to different wireless connections simultaneously used by competing distributed applications transmitting data packets to be forwarded by the access point.

According to the invention, the scheduler successively determines target data rates for the distributed real-time application and the distributed real-time application immediately adapts a data rate of the transmitted data packets to a determined target data rate signaled by the scheduler via an application programming interface, API, of the distributed real-time application. The scheduler does not apply an L4S algorithm to the transmitted data packets and, hence, neither measures the scheduler waiting times of the transmitted data packets in a queue of the access point nor marks the scheduler any transmitted data packet. Instead, the scheduler directly controls the data rate of the distributed real-time application signaling the target data rate via the API. Thereby, the scheduler relies on practically instantaneous adequate reactions of the distributed real-time application to changes of the signaled target data rate. Herein, the terms "immediately" and "practically instantaneous", respectively, mean "delayed only by a transmission time, a processing time and the like".

It is explicitly noted that the scheduler is not required to signal each determined target data rate (see below).

Preferably, the target data rate may be determined dependent on totally available spectral resources and on determined fair spectral resources. The access point provides a constant amount of spectral resources which are fairly distributed among competing distributed applications simultaneously using wireless connections provided by the access point.

The scheduler may determine the fair spectral resources dependent on a number of competing distributed applications. A distribution of the spectral resources among the wireless connections used by $N$ competing distributed applications including the distributed real-time application is fair in case each wireless connection is allocated to an at least approximately equal portion $Res_{app}$ of the totally available spectral resources $Res_{avail}$.

$$Res_{app} = \frac{1}{N} \times Res_{avail}$$

This fair distribution corresponds to N mobile broadband, MBB, users all having the lowest priority according to QCI9 or 5QI9. Of course, the scheduler may determine the fair spectral resources further dependent on a respective quality of service, QoS, required by each competing distributed application, particularly required by the distributed real-time application. The QoS may be specified by a policy and charging rules function, PCRF, or a policy control function, PCF, of the radio access network. The QoS is, however, not explicitly taken into account herein for the sake of an easier understanding. The fair distribution is also referred to as a best effort distribution.

The scheduler may assign a priority to the data packets transmitted by the distributed real-time application and allocate spectral resources corresponding to the assigned priority. For instance, the distributed real-time application may be favored over the competing distributed applications by assigning a relative priority, i.e., involving an, e.g., integer multiple Z>1 in determining the spectral resources $Res_{app}$ allocated to the wireless connection of the distributed real-time application.

$$Res(Z)_{app} = \frac{Z}{N + Z - 1} \times Res_{avail}$$

Accordingly, each competing distributed application is allocated spectral resources $Res_{comp}$ according to

$$Res_{comp}(Z) = \frac{1}{N+Z-1} \times Res_{avail}$$

Alternatively, the scheduler may assign an absolute priority to the data packets transmitted by distributed real-time application, the absolute priority corresponding to an infinite Z, the absolute priority allowing the distributed real-time application for using the totally available spectral resources.

The scheduler may determine the spectral resources additionally dependent on a condition of the wireless connection. The priority of the distributed real-time application and competing applications and, hence, the respective allocated spectral resources may be temporarily increased in case the condition of the wireless connection temporarily deteriorates, e.g., when mobile devices are located in a marginal region of the radio cell.

$$Res_{app}(Z) = \frac{Z + PF_{app}}{N + Z - 1 + PF_{app} - 1 + M \times PF_{comp} - M} \times Res_{avail}$$

Herein, $PF_{app}>1$ denotes the integer proportional fair, PF, priority of the distributed real-time application, M denotes the number of competing applications suffering from bad conditions of their wireless connections and $PF_{comp}>1$ denotes the respective proportional fair priority of each competing application.

The scheduler may determine the spectral resources dependent on spectral resources allocated to but unused by competing distributed applications. The assigned but unused spectral resources may be taken into account by a corrective factor K>0 denoting a percentage of the totally available spectral resources.

$$Res_{app}(Z) = \left( \frac{Z + PF_{app}}{N + Z - 1 + PF_{app} - 1 + M \times PF_{comp} - M} + K \right) \times Res_{avail}$$

Of course, the scheduler may steadily vary the corrective factor $K$ dependent on a current degree of usage of the spectral resources allocated to the wireless connections of the competing distributed applications and on a usage of massive multiple in multiple out, MIMO, in the radio cell.

Additionally, the scheduler may determine the spectral resources dependent on a communication overhead related to the wireless connection. The communication overhead may comprise system messages and the like.

The target data rate may be determined dependent on a symbol time, a modulation scheme and/or a Multiple Input Multiple Output, MIMO, configuration of a mobile device executing a frontend of the distributed real-time application. Starting from the allocated spectral resources the scheduler may determine the target data rate $DR_{app}$ according to

$$DR_{app} = \frac{1s}{t_{Symb}} \times Res_{app}(1) \times QAM_{Mod} \times MIMO_{UE},$$

wherein $t_{Symb}$ denotes a symbol transmission time, $QAM_{Mod}$ denotes a factor corresponding to the modulation scheme and $MIMO_{UE}$ takes into account a MIMO capability of the UE wirelessly connected to the radio access point and executing the frontend of the distributed real-time application.

It is noted that the signaled data rate $DR_{app}$ is lower than a data rate corresponding to the actually allocated spectral resources $Res_{app}(Z)$ for Z>1. The resulting headroom of spectral resources may be distributed by the scheduler among the wireless connections used by the competing distributed applications while the headroom is not used by the distributed real-time application. However, the headroom may be used by the distributed real-time application, e.g., in case the functional minimum data rate is exceptionally signaled instead of the determined target data rate corresponding to the determined fair spectral resources.

Preferably, the scheduler signals the determined target data rate when a difference of the determined target data rate from the last signaled target data rate exceeds a predetermined threshold. The predetermined threshold defines an acceptable range of deviations of the determined data rate. The determined target data rate is, hence, only signaled when the determined target data rate exits the acceptable range. In other words, the predetermined threshold specifies a hysteresis avoiding or at least delaying the signaling in case a current state of the radio cell or a condition of the wireless connection varies. The predetermined threshold may be manually adjustable by an operator of the radio access network within a range from 100 Kbps to 5 Mbps. The acceptable range may be asymmetric, i.e., different thresholds may be predetermined for a positive difference and a negative difference.

Alternatively or additionally, the data rate is determined averaged over a sliding window, a width of the sliding window being in a range from 5 ms to 50 ms and preferably being 10 ms. The averaging over the sliding window avoids the signaling in case positive differences and negative differences from the last signaled target data rate are balanced, i.e., cancel out, within the sliding window.

A combination of the two preceding features most effectively prevents the determined target data rate from being signaled too often and, thus, protects the API and the distributed real-time application from being unduly loaded due to the signaling.

Of course, the scheduler may signal the determined target data rate at once when the determined target data rate suddenly drops by a large amount. The determined target data rate drops suddenly by a large amount in case the determined target data rate strongly decreases within a very short time interval.

The target data rate may be determined periodically. A frequency of the determination is favorably chosen to sufficiently take into account changes of the state of the radio cell and the condition of the wireless connection and, at the same time, to avoid an adverse load of the access point and the RAN. It is noted, that higher frequencies of the determination of the target bitrate imply smaller steps of signaled target data rates and, hence, a greater smoothness of the adaptations of the distributed real-time application.

In a favorable embodiment, the distributed real-time application initially transmits a functional minimum data rate of the distributed real-time application to the scheduler and the scheduler exceptionally determines the target data rate to be the functional minimum data rate when the normally determined target data rate is lower than the functional minimum data rate. This way, the scheduler prevents the distributed real-time application from temporarily freezing or even aborting.

The real-time application may define the minimum functional data rate being a data rate allowing just a minimum function of the distributed real-time application. In other words, the distributed real-time application does not function at data rates below the functional minimum data rate. In case the data rate falls below the functional minimum data rate the distributed real-time application freezes, i.e., at least temporarily stops functioning or even aborts.

A frontend of the distributed real-time application may be executed by a mobile device and a backend of the distributed real-time application may be executed by an edge data center. Due to the edge data center being logically close, usually also spatially close to the access point, the wireless connection used by the distributed real-time application has a very low latency.

Another aspect of the invention is a distributed real-time application, comprising an application programming interface, API. The scheduler may signal the target data rate to an application frontend of the distributed real-time application or to an application backend of the distributed real-time application. The application frontend may be executed by a mobile device, i.e., user equipment, UE. The application backend may be executed by a server device connected to the radio access network. The API may allow for in-band signaling or out-of band signaling.

According the invention, the distributed real-time application is configured for immediately adapting a data rate of data packets transmitted by the distributed real-time application to a target data rate signaled via the application programming interface. The immediate adaptation of the data rate allows a real-time control of the data rate for the scheduler. Thus, the scheduler can change a distribution of spectral resources assigned among competing distributed applications very flexibly dependent on a current state of the radio cell or a current condition of the wireless connection and rely on practically instantaneous adequate reactions of the distributed real-time application to such changes.

A third aspect of the invention is an access point for a radio access network, RAN, comprising a computing device configured for operating a scheduler. The access point may be generally referred to as a base transceiver station, BTS. During an operation of the scheduler the scheduler assigns spectral resources to wireless connections provided by the access point.

According to the invention, the computing device is configured to operate the scheduler cooperating with a distributed real-time application according to an embodiment of the invention in a method according to the invention. Due to the respective configurations of the access point and the distributed real-time application the access point provides the distributed real-time application with a wireless connection having a low and stable latency without applying an L4S algorithm.

A fourth aspect of the invention is a radio access network, RAN. The RAN may provide wireless connections to mobile devices. In detail, access points of the RAN establish radio cells allowing mobile devices located within the radio cell to connect to the RAN via the access point.

According to the invention, the radio access network comprises an access according to the invention. Due to the access point the RAN provides the distributed real-time application with a wireless connection having a low and stable latency without applying an L4S algorithm.

A fifth aspect of the invention is a computer program product, comprising a digital storage media with a program code. The digital storage medium is chosen from the group comprising a compact disk, CD, a digital versatile disk, DVD, a hard disk, HD, a random access memory, RAM, chip, a universal serial bus, USB, stick, a cloud storage and the like. The computer program product allows for implementing an inventive access point of a RAN, i.e., for setting up the scheduler on the computing device, the computing device being comprised by the access point.

According to the invention, the program code causes a computing device to operate a scheduler cooperating with a distributed real-time application according to an embodiment the invention in a method according to an embodiment of the invention when being executed by a processor of the computing device. The computer program product enables the computing device to be an inventive access point of a RAN, the access point providing a distributed real-time application with a wireless connection having a low and stable latency without applying an L4S algorithm.

It is an essential advantage of the inventive method that the distributed real-time application is provided with a wireless connection having a low and stable latency without applying an L4S algorithm. As a consequence, the distributed real-time application is efficiently and reliably prevented from freezing or even aborting.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

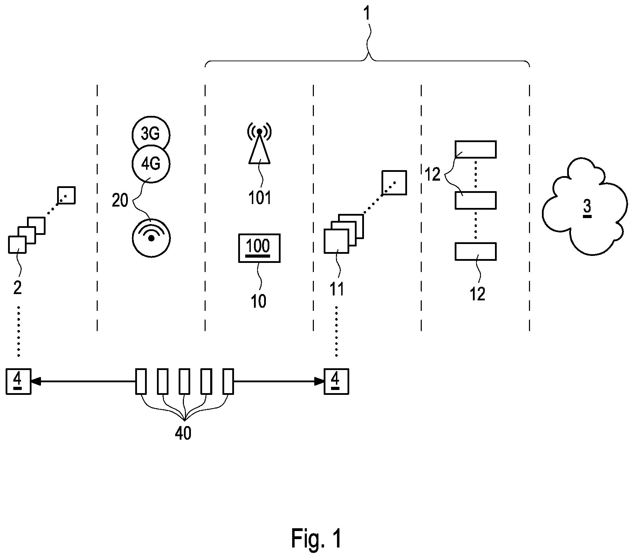

Fig. 1 schematically shows a radio access network, RAN, according to an embodiment of the invention.

Fig. 1 schematically shows a radio access network, RAN, 1 according to an embodiment of the invention. The RAN 1 comprises at least one access point 10 according to an embodiment of the invention and an antenna 101 connected to the access point 10, generally a plurality of access points 10 with respective connected antennas 101. Exemplarily, the radio access network 1 is configured as a cellular network, and the at least one access point 10 is configured as a base transceiver station, BTS. Alternatively, the radio access network 1 may be configured as a wide local area network, WLAN, and the at least one access point 10 may be a WLAN access point.

The radio access network 1 may further comprise an edge data center 11 adjacent and connected to the at least one access point 10 and a backbone 12 the edge data center 11 is connected to. An internet 3 may be connected to the backbone 12.

At least one mobile device 2, e.g., a smartphone, a tablet, a notebook and the like, generally a plurality of mobile devices 2, may be connected to the at least one access point 10 via a wireless connection 20 provided by the at least one access point 10. The mobile device 2 may comprise a sender of a distributed real-time application 4.

The distributed real-time application 4 comprises an application programming interface, API, and is configured for immediately adapting a data rate of data packets transmitted by the distributed real-time application 4 to a target data rate signaled via the application programming interface.

The edge data center 11 may comprise a receiver of the distributed real time application 4. Alternatively, the mobile device 2 may comprise the receiver of the distributed real-time application 4, and the edge data center 11 may comprise the sender of the distributed real-time application 4. The sender of the distributed real-time application is configured for transmitting data packets 40 via the wireless connection 20 to the receiver of the distributed real-time application 4.

The at least one access point 10 comprises a scheduler 100, more precisely a computing device being configured for operating the scheduler 100. The computing device is particularly configured by means of a computer program product comprising a digital storage medium storing a program code. The program code causes the computing device for operating the scheduler 100 cooperating with the distributed real-time application 4 in a method according to an embodiment of the invention when being executed by a processor of the computing device.

The scheduler 100 of the access point 10 of the radio access network, RAN, 1 is operated by the computing device in a method according to the invention as follows, the scheduler 100 cooperating with the distributed real-time application 4.

The access point 10 of a RAN 1 forwards data packets 40 transmitted by the distributed real-time application 4 via a wireless connection 20 provided by the access point 10. Particularly, a frontend of the distributed real-time application 4 may be executed by the mobile device 2, and a backend of the distributed real-time application 4 may be executed by the edge data center 11.

The scheduler 100 successively determines target data rates for the distributed real-time application 4. Preferably, the target data rate is determined periodically. The target data rate may be determined averaged over a sliding window, a width of the sliding window being in a range from 5 ms to 50 ms and preferably being 10 ms.

The scheduler 100 preferably determines the target data rate dependent on totally available spectral resources and on determined fair spectral resources. The target data rate may be determined dependent on a symbol time, a modulation scheme and/or a Multiple Input Multiple Output, MIMO, configuration of the mobile device executing the frontend of the distributed real-time application 4. The scheduler 100 may determine the fair spectral resources dependent on a number of competing distributed applications, on a condition of the wireless connection 20 and/or on spectral resources allocacted to but unused by competing distributed applications.

The scheduler 100 of the access point 10 allocates spectral resources to the wireless connection 20. The scheduler 100 may assign a priority to the data packets transmitted by the distributed real-time application 4 and allocate spectral resources corresponding to the assigned priority.

The distributed real-time application 4 immediately adapts a data rate of the transmitted data packets 40 to a determined target data rate signaled by the scheduler 100 via an application programming interface, API, of the distributed real-time application 4. The scheduler 100 may signal the determined target data rate when a difference of the determined target data rate from the last signaled target data rate exceeds a predetermined threshold, the predetermined threshold being manually adjustable by an operator of the radio access network within a range from 100 Kbps to 5 Mbps. However, the target data rate may be signaled at once when the determined target data rate suddenly drops by a large amount.

Favorably, the distributed real-time application 4 initially transmits a functional minimum data rate of the distributed real-time application 4 to the scheduler 100 and the scheduler 100 exceptionally determines the target data rate to be the functional minimum data rate when the normally determined target data rate is lower than the functional minimum data rate.

Reference Numerals

1       radio access network
10      access point
100     scheduler
101     antenna
11      edge data center
12      backbone
2       mobile device
20      wireless connection
3       internet
4       distributed real-time application
40      data packet

**Claims**

1. A method for operating a scheduler of an access point (10) of a radio access network, RAN, (1) wherein

    - an access point (10) of a RAN (1) forwards data packets (40) transmitted by the distributed real-time application (4) via a wireless connection (20) provided by the access point (10);
    - a scheduler (100) of the access point (10) allocates spectral resources to the wireless connection (20);
    - the scheduler (100) successively determines target data rates for the distributed real-time application (4);
    - the distributed real-time application (4) immediately adapts a data rate of the transmitted data packets (40) to a determined target data rate signaled by the scheduler (100) via an application programming interface, API, of the distributed real-time application (4).

2. The method according to claim 1, wherein the scheduler (100) determines the target data rate dependent on totally available spectral resources and on determined fair spectral resources.

3. The method according to claim 2, wherein the scheduler (100) determines the fair spectral resources dependent on a number of competing distributed applications, on a condition of the wireless connection (20) and/or on spectral resources allocated to but unused by competing distributed applications.

4. The method according to one of claims 1 to 3, wherein the scheduler (100) assigns a priority to the data packets transmitted by the distributed real-time application (4) and allocates spectral resources corresponding to the assigned priority.

5. The method according to one of claims 1 to 4, wherein the target data rate is determined dependent on a symbol time, a modulation scheme and/or a Multiple Input Multiple Output, MIMO, configuration of a mobile device (2) executing a frontend of the distributed real-time application (4).

6. The method according to one of claims 1 to 5, wherein the scheduler (100) signals the determined target data rate when a difference of the determined target data rate from the last signaled target data rate exceeds a predetermined threshold, the predetermined threshold being manually adjustable by an operator of the radio access network within a range from 100 Kbps to 5 Mbps.

7. The method according to one of claims 1 to 6, wherein the target data rate is determined averaged over a sliding window, a width of the sliding window being in a range from 5 ms to 50 ms and preferably being 10 ms.

8. The method according to one of claims 1 to 7, wherein the target data rate is signaled at once when the determined target data rate suddenly drops by a large amount.

9. The method according to one of claims 1 to 8, wherein the target data rate is determined periodically.

10. The method according to one of claims 1 to 9, wherein the distributed real-time application (4) initially transmits a functional minimum data rate of the distributed real-time application (4) to the scheduler (100) and the scheduler (100) exceptionally determines the target data rate to be the functional minimum data rate when the normally determined target data rate is lower than the functional minimum data rate.

11. The method according to one of claims 1 to 10, wherein a frontend of the distributed real-time application (4) is executed by a mobile device (2) and a backend of the distributed real-time application (4) is executed by an edge data center (11).

12. A distributed real-time application (4), comprising an application programming interface, API, and being configured for immediately adapting a data rate of data packets transmitted by the distributed real-time application (4) to a target data rate signaled via the application programming interface.

13. An access point (10) for a radio access network, RAN, (1), comprising a computing device configured for operating a scheduler (100) cooperating with a distributed real-time application according to claim 12 in a method according to one of claims 1 to 11.

14. A radio access network, RAN, (1), comprising an access point (10) according to claim 13.

15. A computer program product, comprising a digital storage media with a program code, the program code causing a computing device to operate a scheduler (100) cooperating with a distributed real-time application (4) in a method according to one of claims 1 to 11 when being executed by a processor of the computing device.

**Amended claims in accordance with Rule 137(2) EPC.**

1. A method for operating a scheduler of an access point (10) of a radio access network, RAN, (1) wherein

- an access point (10) of a RAN (1) forwards data packets (40) transmitted by a distributed real-time application (4) via a wireless connection (20) provided by the access point (10);
- a scheduler (100) of the access point (10) allocates spectral resources to the wireless connection (20);

- the scheduler (100) successively determines target data rates for the distributed real-time application (4);
- the distributed real-time application (4) immediately adapts a data rate of the transmitted data packets (40) to a determined target data rate signaled by the scheduler (100) via an application programming interface, API, of the distributed real-time application (4).

2. The method according to claim 1, wherein the scheduler (100) determines the target data rate dependent on totally available spectral resources and on determined fair spectral resources.

3. The method according to claim 2, wherein the scheduler (100) determines the fair spectral resources dependent on a number of competing distributed applications, on a condition of the wireless connection (20) and/or on spectral resources allocated to but unused by competing distributed applications.

4. The method according to one of claims 1 to 3, wherein the scheduler (100) assigns a priority to the data packets transmitted by the distributed real-time application (4) and allocates spectral resources corresponding to the assigned priority.

5. The method according to one of claims 1 to 4, wherein the target data rate is determined dependent on a symbol time, a modulation scheme and/or a Multiple Input Multiple Output, MIMO, configuration of a mobile device (2) executing a frontend of the distributed real-time application (4).

6. The method according to one of claims 1 to 5, wherein the scheduler (100) signals the determined target data rate when a difference of the determined target data rate from the last signaled target data rate exceeds a predetermined threshold, the predetermined threshold being manually adjustable by an operator of the radio access network within a range from 100 Kbps to 5 Mbps.

7. The method according to one of claims 1 to 6, wherein the target data rate is determined averaged over a sliding window, a width of the sliding window being in a range from 5 ms to 50 ms and preferably being 10 ms.

8. The method according to one of claims 1 to 7, wherein the target data rate is signaled at once when the determined target data rate suddenly drops by a large amount.

9. The method according to one of claims 1 to 8, wherein the target data rate is determined periodically.

10. The method according to one of claims 1 to 9, wherein the distributed real-time application (4) initially transmits a functional minimum data rate of the distributed real-time application (4) to the scheduler (100) and the scheduler (100) exceptionally determines the target data rate to be the functional minimum data rate when the normally determined target data rate is lower than the functional minimum data rate.

11. The method according to one of claims 1 to 10, wherein a frontend of the distributed real-time application (4) is executed by a mobile device (2) and a backend of the distributed real-time application (4) is executed by an edge data center (11).

12. A distributed real-time application (4), comprising an application programming interface, API, and being configured for immediately adapting a data rate of data packets transmitted by the distributed real-time application (4) to a target data rate signaled via the application programming interface.

13. An access point (10) for a radio access network, RAN, (1), comprising a computing device configured for operating a scheduler (100) cooperating with a distributed real-time application according to claim 12 in a method according to one of claims 1 to 11.

14. A radio access network, RAN, (1), comprising an access point (10) according to claim 13.

15. A computer program product, comprising a digital storage media with a program code, the program code causing a computing device to operate a scheduler (100) cooperating with a distributed real-time application (4) in a method according to one of claims 1 to 11 when being executed by a processor of the computing device.

EP 4 765 944 A1

Fig. 1

**EUROPEAN SEARCH REPORT**

Europäisches Patentamt
European Patent Office
Office européen des brevets

Application Number

EP 24 22 2313

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/214320 A1 (SCHNIEDERS DOMINIK [DE]) 27 June 2024 (2024-06-27) | 1-6,8,9, 11-15 | INV. H04W28/22 |
| A | * paragraphs [0004], [0005], [0009], [0014], [0015], [0017] - [0021], [0023] - [0028] * <br> * paragraphs [0036], [0037] * <br> * figure 1 * | 7,10 | |
| X | US 2024/195746 A1 (SCHNIEDERS DOMINIK [DE] ET AL) 13 June 2024 (2024-06-13) <br> * paragraphs [0005], [0014] - [0017], [0036] * <br> * figure 1 * | 1-3, 10-15 | |
| X | US 2024/349263 A1 (SCHNIEDERS DOMINIK [DE]) 17 October 2024 (2024-10-17) <br> * paragraphs [0013], [0014], [0020], [0022], [0024], [0027] * | 1-4,7, 11-15 | |

TECHNICAL FIELDS SEARCHED (IPC)

H04W
H04L

The present search report has been drawn up for all claims

| Place of search | Date of completion of the search | Examiner |
|---|---|---|
| The Hague | 10 April 2025 | Konstantopoulou, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 765 944 A1**

## ANNEX TO THE EUROPEAN SEARCH REPORT
## ON EUROPEAN PATENT APPLICATION NO.

EP 24 22 2313

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | Publication date |
|---|---|---|---|
| US 2024214320 A1 | 27-06-2024 | EP 4395272 A1 | 03-07-2024 |
| | | US 2024214320 A1 | 27-06-2024 |
| US 2024195746 A1 | 13-06-2024 | EP 4383675 A1 | 12-06-2024 |
| | | US 2024195746 A1 | 13-06-2024 |
| US 2024349263 A1 | 17-10-2024 | EP 4447403 A1 | 16-10-2024 |
| | | US 2024349263 A1 | 17-10-2024 |

EPO FORM P0459

For more details about this annex : see Official Journal of the European Patent Office, No. 12/82